# EUROPEAN PATENT APPLICATION

(11) **EP 4 641 050 A1**
(43) Date of publication of application: **29.10.2025**
(21) Application number: 23905083.4
(22) Date of filing: 04.04.2023
(51) Int. Cl.: F16H 57/04, F01P 3/18, F01P 5/06, F02B 29/04, B60K 11/04, B60H 1/32, F01P 5/04, F01P 1/00, F01P 3/20, F15B 21/0423, B60K 11/00, B60K 11/06, B60H 1/00

(54) **ENGINEERING VEHICLE COOLING SYSTEM, ENGINEERING VEHICLE AND COOLING METHOD THEREFOR**

(30) Priority: 23.12.2022 CN 202211662531
(71) Applicant: Xuzhou Construction Machinery Group Co., Ltd., Xuzhou, Jiangsu 221004 (CN)
(72) Inventor: DONG, Shuanlao, Xuzhou, Jiangsu 221004 (CN); ZHOU, Penghui, Xuzhou, Jiangsu 221004 (CN); WEI, Zhelei, Xuzhou, Jiangsu 221004 (CN)
(74) Representative: Specht, Peter
(86) International application number: PCT/CN2023/086243
(87) International publication number: WO 2024/130891

(57) **Abstract**

This disclosure relates to the field of engineering machinery and provides an engineering vehicle cooling system that is used for realizing on-demand cooling of the engineering vehicle. The engineering vehicle cooling system includes an engine cooling system (1), a hydraulic cooling system (2), a drivetrain cooling system (3) and an air-conditioning cooling system (4). The engine cooling system (1) includes an engine (11), a cooling fan (12) and a heat dissipation assembly (13). The engine (11) is drivingly connected to the cooling fan (12). The hydraulic cooling system (2) includes a hydraulic system (21) and a first electronic fan (22) configured to cool the hydraulic system (21). The drivetrain cooling system (3) includes a drivetrain (31) and a second electronic fan (32). The air-conditioning cooling system (4) includes an air-conditioning system (41) and a third electronic fan (42). The first electronic fan (22), the second electronic fan (32) and the third electronic fan (42) are distributed around the cooling fan (12), realizing on-demand cooling of the engine, the hydraulic system, the drivetrain and the air-conditioning system. This disclosure further provides an engineering vehicle and a cooling method thereof.

## Description

### CROSS-REFERENCE TO RELATED APPLICATIONS

This disclosure is based on and claims priority to the application with Application No. 202211662531.8 filed on Dec. 23, 2022, the disclosure of which is hereby incorporated herein by reference in its entirety.

### BACKGROUND OF THE INVENTION

### Field of the Invention

This disclosure relates to the field of engineering machinery, in particular to an engineering vehicle cooling system, an engineering vehicle and a cooling method thereof.

### Description of Related Art

Most engineering machines operate in situ or in a short distance, the operating environment is severe, and a cooling system of the engineering machines is difficult to design. Unlike both commercial vehicles and passenger cars, the cooling object of engineering machines includes not only the engine, but also the drivetrain, the hydraulic system and the like.

In the related art, an engineering machine dissipates heat in the following modes: in the first mode, the engine is used to drive the fan for cooling so as to realize heat dissipation of parts of the engineering vehicle. In the second mode, the engine is used to drive a fan, and a clutch is arranged between them to realize heat dissipation of parts of the engineering vehicle. In the third mode, the engineering vehicle includes a plurality of fans, and an electric machine or a motor is separately arranged to drive all the fans to work for cooling parts of the engineering vehicle. In the fourth mode, the engineering vehicle includes a plurality of fans, for each of which a low-power motor is provided to drive one or more low-power fans for cooling parts of the engineering vehicle.

The inventors have found that the cooling requirements of various components of the engine, the drivetrain and the hydraulic system of an engineering machine varied widely. The first three cooling modes mentioned above are unreasonable in their performance and do not meet the cooling requirement of the engineering machine. The fourth mode requires too many motors, has excessively complex structure of cooling system and occupies excessively large space.

### SUMMARY OF THE INVENTION

This disclosure provides an engineering vehicle cooling system, an engineering vehicle and a method of cooling an engineering vehicle, which are used for realizing on-demand cooling of at least one of an engine, a drivetrain, a hydraulic system and an air-conditioning system of the engineering vehicle on the premise of realizing small size of the cooling system.

This disclosure provides an engineering vehicle cooling system, including:
an engine cooling system including an engine, a cooling fan and a heat dissipation assembly, the engine drivingly connected to the cooling fan to cool the heat dissipation assembly;
a hydraulic cooling system including a hydraulic system and a first electronic fan , the first electronic fan is configured to cool the hydraulic system;
a drivetrain cooling system including a drivetrain and a second electronic fan configured to cool the drivetrain; and
an air-conditioning cooling system including an air-conditioning system and a third electronic fan the third electronic fan is configured to cool the air-conditioning system;
wherein the first electronic fan, the second electronic fan and the third electronic fan are distributed around the cooling fan.

In some embodiments, the heat dissipation assembly includes:
a water-cooled radiator mounted outside the engine, the cooling fan being disposed adjacent to the water-cooled radiator to cool it; and
an intercooler disposed adjacent to the water-cooled radiator;
wherein the engine cooling system further includes:
   a water pump in fluid communication with an oil outlet of the water-cooled radiator, the water pump being in drivable connection with the engine;
   a thermostat mounted upstream of the water-cooled radiator and located downstream of the water pump, the thermostat including a first water outlet and a second water outlet that are arranged in parallel, the first water outlet being directly connected with a water inlet of the water pump, the water-cooled radiator being mounted downstream of the second water outlet of the thermostat; and
   a water temperature detection element mounted at a water outlet of the engine.

In some embodiments, the cooling fan is fixed to the output shaft of the engine, and the cooling fan is facing the water-cooled radiator.

In some embodiments, the engine cooling system further includes:
a first air guiding cover fixed at the heat dissipation assembly, in which first air guiding cover the cooling fan is located, and the intercooler is fixedly connected with the water-cooling radiator.

In some embodiments, the hydraulic cooling system further includes:
a hydraulic pump in drivable connection with the engine; and
a hydraulic oil radiator with an oil inlet in fluid communication with a first oil return port of the hydraulic system and with an oil outlet in fluid communication with an oil tank of the hydraulic system mounted inside the power cabin, the first electronic fan being mounted on a side of the hydraulic oil radiator facing the engine.

In some embodiments, the hydraulic cooling system further includes:
a hydraulic oil temperature detection element mounted at an oil inlet of the hydraulic oil radiator to detect the oil temperature of hydraulic oil of the hydraulic system; and a hydraulic oil pressure detection element mounted in the hydraulic system to detect an oil pressure of the hydraulic system.

In some embodiments, the hydraulic cooling system further includes:
a first control element electrically connected to the hydraulic oil temperature detection element, the hydraulic oil pressure detection element and the first electronic fan, the first control element being configured to control operation parameters of the first electronic fan as a function of a temperature parameter detected by the hydraulic oil temperature detection element.

In some embodiments, the operation parameters of the first electronic fan include at least one of: start, stop, rotation speed, rotation duration.

In some embodiments, the first control element is configured to implement the following steps:
in the case of T₂≤T_{2L}, stopping the first electronic fan;
in the case of T₂>T_{2L}, controlling the rotation speed of the first electronic fan by means of a PID control method, so that the rising speed of T₂ is 0<ΔT₂/Δt≤X₁;
in the case of | T_{2H}-T₂ | ≤X₂, operating the first electronic fan at a constant rotation speed; in the case of T₂-T_{2H}>X₁, operating the first electronic fan at full speed, so that the oil temperature of the hydraulic system does not exceed T₂ₘₐₓ;
wherein T₂ is the oil temperature detected by the hydraulic oil temperature detection element; T_{2H} is a high-efficiency operation temperature of the hydraulic oil and is a set value; T_{2L} is a start temperature of the first electronic fan and is a set value; X₁ is the temperature rising speed of the hydraulic oil of the hydraulic system; X₂ is the fluctuation range after the hydraulic oil temperature of the hydraulic system is stabilized; T₂ₘₐₓ is an allowable temperature of hydraulic oil of the hydraulic system.

In some embodiments, T_{2L} is 45°C -55°C, T_{2H} is 65°C -75°C, and/or T₂ₘₐₓ is 80°C -90°C, and/or X₂ is 1.5°C -2.5°C.

In some embodiments, the drivetrain cooling system further includes:
a transmission oil radiator with an oil inlet in fluid communication with a second oil return port of a gearbox of the drivetrain and with an oil outlet in fluid communication with an inflow port of the gearbox of the drivetrain, the second electronic fan being mounted to the transmission oil radiator.

In some embodiments, the drivetrain cooling system further includes:
a transmission oil temperature detection element mounted at an oil inlet of the transmission oil radiator to detect the oil temperature of hydraulic system; and
a transmission oil pressure detection element mounted in the gearbox of the engine to detect an oil pressure of the hydraulic system.

In some embodiments, the drivetrain cooling system further includes:
a second control element electrically connected to the transmission oil temperature detection element, the transmission oil pressure detection element and the second electronic fan, the second control element being configured to control operation parameters of the second electronic fan as a function of a temperature parameter detected by the transmission oil temperature detection element.

In some embodiments, the operation parameters of the second electronic fan include at least one of: start, stop, rotation speed, rotation duration.

In some embodiments, the second control element is configured to implement the following step:
in the case of T₁≤T_{1L}, stopping the second electronic fan; in the case of T₁>T_{1L}, controlling the rotation speed of the second electronic fan by means of a PID control method, so that the rising speed of T₁ is 0<ΔT₁/Δt≤Y₁; in the case of | T_{1H}-T₁ | ≤Y₂, operating the second electronic fan at a constant speed; And in the case of T₁-T_{1H}>Y₂, operating the second electronic fan at full speed, so that T₁<T₁ₘₐₓ;
wherein T₁ is the oil temperature of the lubricating oil detected by the transmission oil temperature detection element; T_{1L} is a start temperature of the first electronic fan and is a set value; T_{1H} is a high-efficiency operation temperature of the hydraulic oil and is a set value; T₁ₘₐₓ is an allowable temperature of lubricating oil; Y₁ is the temperature rising rate of the hydraulic oil of the hydraulic system; Y₂ is the fluctuation range after the hydraulic oil temperature of the hydraulic system is stabilized.

In some embodiments, T_{1L} is 65°C -75 °C, T_{1H} is 85°C -95°C, and/or T₁ₘₐₓ is 115°C -125°C, and/or Y₂ is 1.5°C -2.5°C.

In some embodiments, the air-conditioning cooling system further includes:
a condenser in fluid communication with the air-conditioning system, the condenser being configured to circulate a refrigerant within the air-conditioning system; and
a third control element electrically connected to the third electronic fan for controlling operation parameters of the third electronic fan.

In some embodiments, the first electronic fan, the second electronic fan and the third electronic fan are all located inside a power cabin of the engineering vehicle.

The embodiments of this disclosure also provides an engineering vehicle including an engineering cooling system provided by any one of the technical solutions of this disclosure.

The embodiments of this disclosure further provides a method of cooling an engineering vehicle by using an engineering cooling system provided by any one of the technical solutions of this disclosure, including following steps:
detecting the temperature of the engine, the temperature of hydraulic oil of the hydraulic system, the temperature of the drivetrain and the temperature of the air-conditioning system to determine whether there is a component that needs to be cooled in the engine, the hydraulic system, the drivetrain and the air-conditioning system;
if there is a component that needs to be cooled, the triggering condition is met; when the triggering condition is met, cooling in at least one of the following ways: cooling the heat dissipation assembly by means of the cooling fan of the engineering vehicle cooling system, cooling the hydraulic oil radiator by means of the first electronic fan, cooling the transmission oil radiator by means of the second electronic fan, and cooling the condenser by means of the third electronic fan.

The engineering vehicle cooling system provided by the aforesaid technical solutions includes an engine cooling system, a hydraulic cooling system, a drivetrain cooling system and an air-conditioning cooling system. Each system is individually equipped with a corresponding fan. Fans are independently controlled and do not affect each other. It achieves on-demand cooling and the control mode is flexible and diverse. The whole engineering vehicle cooling system has a high degree of integration.

### BRIEF DESCRIPTION OF THE DRAWINGS

Figure 1 shows a schematic perspective view of an engineering vehicle cooling system according to some embodiments of the disclosure.
Figure 2 shows a schematic front view of an engineering vehicle cooling system according to some embodiments of the disclosure.
Figure 3 shows a schematic side view of an engineering vehicle cooling system according to some embodiments of the disclosure.
Figure 4 shows a schematic rear view of an engineering vehicle cooling system according to some embodiments of the disclosure.
Figure 5 shows a schematic perspective view of an engine cooling system of an engineering vehicle cooling system according to some embodiments of the disclosure.
Figure 6 shows a schematic view of connection relationship of an engine cooling system of an engineering vehicle cooling system according to some embodiments of the disclosure.
Figure 7 shows a schematic view of cooling water circulation of an engine cooling system of an engineering vehicle cooling system according to some embodiments of the disclosure.
Figure 8 shows a schematic view of connection relationship of a hydraulic cooling system of an engineering vehicle cooling system according to some embodiments of the disclosure.
Figure 9 shows a schematic perspective structural view of a hydraulic cooling system of an engineering vehicle cooling system according to some embodiments of the disclosure.
Figure 10 shows a schematic view of connection relationship of a drivetrain cooling system of an engineering vehicle cooling system according to some embodiments of the disclosure.
Figure 11 shows a schematic perspective structural view of a drivetrain cooling system of an engineering vehicle cooling system according to some embodiments of the disclosure.
Figure 12 shows a schematic view of connection relationship of an air-conditioning cooling system of an engineering vehicle cooling system according to some embodiments of the disclosure.
Figure 13 shows a schematic perspective view of an air-conditioning cooling system of an engineering vehicle cooling system according to some embodiments of the disclosure.

### List of reference signs:

1. engine cooling system; 2. hydraulic cooling system; 3. drivetrain cooling system; 4. air-conditioning cooling system;
11. engine; 12. cooling fan; 13. heat dissipation assembly; 14. water pump; 15. thermostat;
16. water temperature detection element; 17. first air guide cover; 19. turbocharger;
131. water-cooled radiator; 132. intercooler;
151. first water outlet; 152. second water outlet;
21. hydraulic system; 22. first electronic fan; 23. hydraulic pump; 24. hydraulic oil radiator;
25. hydraulic oil temperature detection element; 26. hydraulic oil pressure detection element;
27. first control element; 28. valve set; 29. actuator;
210. first oil return port; 211. oil tank;
31. drivetrain; 32. second electronic fan; 33. transmission oil radiator; 34. transmission oil temperature detection element; 35. transmission oil pressure detection element; 36. second control element; 37. transmission axle; 38. tire;
311. gearbox; 3111. second oil return port; 3112. inflow port;
331. oil inlet; 332. oil outlet;
41. air-conditioning system; 42. third electronic fan; 43. condenser; 44. cab; 45. compressor;
46. refrigerant line; 47. third control element.

### DESCRIPTION OF THE INVENTION

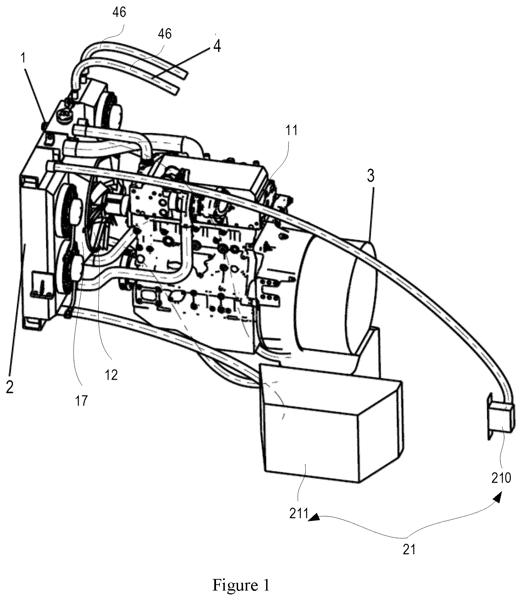

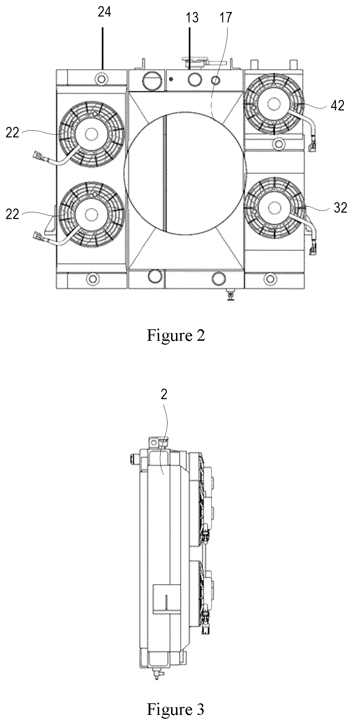

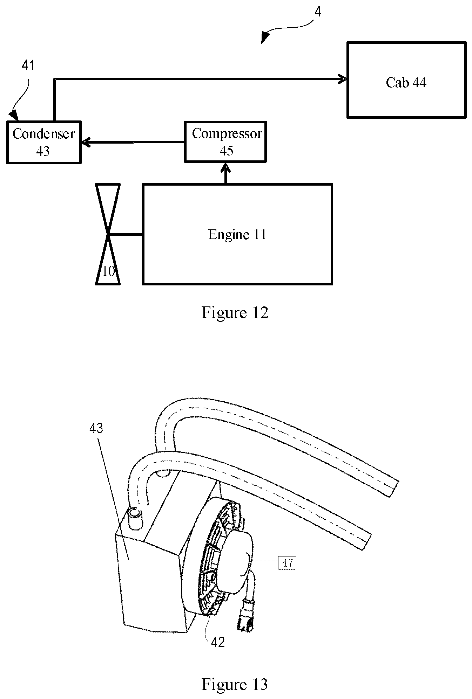

The technical solution according to the disclosure is explained in more detail below with reference to Figures 1 to 13.

The inventors discover upon research that when the engine of the engineering vehicle is operating, an overhigh temperature will result in a poor reliability of the engine. When the engine is operated in a supercooled state (the temperature of the cooling water is 40°C -50°C), the abrasion degree of parts is several times larger than that of parts when the engine is operated at a normal operation temperature (80°C -90°C). Thus, the main task of the engine cooling system is to enable the internal combustion engine to be operated at the most appropriate temperature. The lubricating oil in the hydraulic system and the drivetrain of the engineering machine generates a large amount of heat in the process of hydraulic transmission and fluidic force transmission. An overhigh temperature will result in a decline in transmission efficiency, rapid aging of the oil seals, oil thinning, parts wear and tear. A superlow oil temperature, in contrast, will lead to a large loss in oil stirring power and a low efficiency. The optimal operation temperature of a drivetrain is about 80°C. The optimal operation temperature of the hydraulic pump and the hydraulic valve of a hydraulic system is about 60°C. The air-conditioning system of an engineering machine itself also needs to be cooled. None of the cooling systems in the related art fully achieve the cooling of the engine system, the hydraulic system, the drivetrain and the air-conditioning system.

As shown in Figure 1, an embodiment of this disclosure provides an engineering vehicle cooling system, which includes an engine cooling system 1, a hydraulic cooling system 2, a drivetrain cooling system 3 and an air-conditioning cooling system 4.

The engine cooling system 1 includes an engine 11, a cooling fan 12 and a heat dissipation assembly 13. The engine 11 is drivingly connected to the cooling fan 12 to cool the heat dissipation assembly 13.

The engine 11 is configured to provide power. The cooling fan 12 is in direct drivable connection with the engine 11 and is directly driven by the engine 11 to rotate. The rotational speed of the cooling fan 12 is positively correlated with the rotational speed of the engine 11. If the engine 11 rotates fast, the cooling fan 12 also rotates fast with a high cooling efficiency; otherwise, if the engine 11 rotates slowly, the cooling fan 12 also rotates slowly.

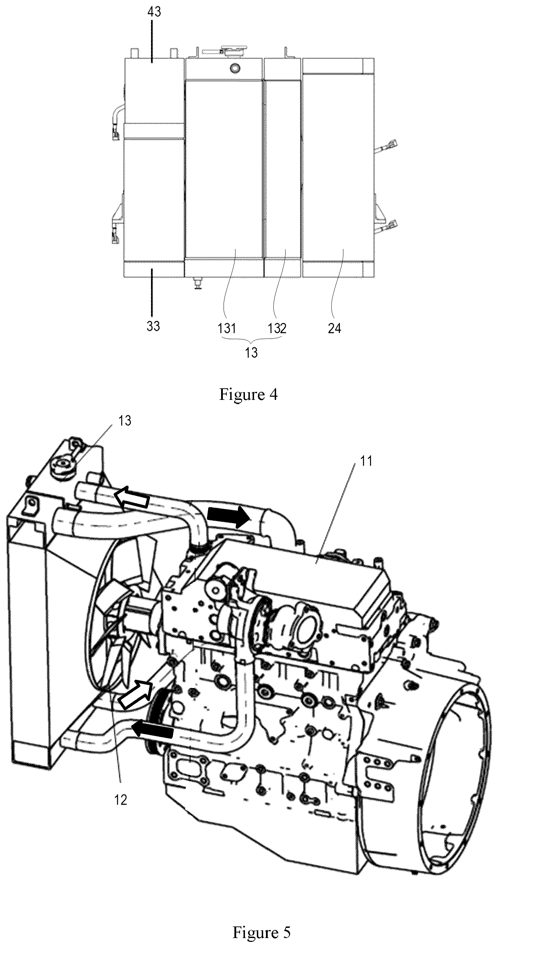

Referring to Figure 4, the heat dissipation assembly 13 includes a water-cooled radiator 131 and an intercooler 132. The water-cooled radiator 131 is mounted outside the engine 11. The cooling fan 12 is disposed adjacent to the water-cooled radiator 131 to cool it. The intercooler 132 is disposed adjacent to the water-cooled radiator 131.

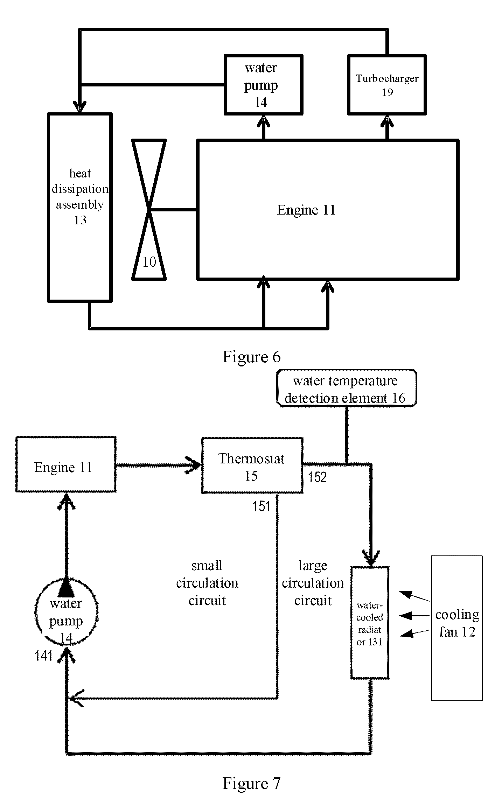

Referring to Figures 5 and 6, the engine system includes an engine 11, a heat dissipation assembly 13 with a water-cooled radiator 131 and an intercooler 132, a cooling fan 10, a water pump 14 and a turbocharger 19. The engine 11 is in drivable connection with the cooling fan 10 to cool the heat dissipation assembly 13.

The engine system further includes a water pump 14, a thermostat 15, a water temperature detection element 16 and a turbocharger 19. The engine 11 is connected to the water pump 14 and the turbocharger 19, transmits water, high-temperature and high-pressure air to the heat dissipation assembly 13, transmits water to the engine water jacket for cooling after cooling by the cooling fan 10, and transmits the low-temperature and high-pressure air to the engine combustion chamber for combustion.

Referring to Figures 6 and 7, the water pump 14 is in fluid communication with an oil outlet 332 of the water-cooled radiator 131, and the water pump 14 is in drivable connection with the engine 11. The thermostat 15 is mounted upstream of the water-cooled radiator 131 and located downstream of the water pump 14. The thermostat 15 includes a first water outlet 151 and a second water outlet 152 that are arranged in parallel. The first water outlet 151 is directly connected with a water inlet 141 of the water pump 14. The water-cooled radiator 131 is mounted downstream of the second water outlet 152 of the thermostat 15. The water temperature detection element 16 is mounted at a water outlet of the engine 11.

As shown in Figures 6 and 7, under the function of the water pump 14, the water in the water-cooled radiator 131 flows through two circulation circuits i.e. a large circulation circuit and a small circulation circuit. One of the two circulation circuits is conductive. The water pump 14 pumps the water from the water-cooled radiator 131 towards the engine 11, and the cooling water from the engine 11 flows directly back to the water pump 14 after passing through the thermostat 15, which is called a small circulation. The water pump 14 pumps the water from the water-cooled radiator 131 towards the engine 11, and the cooling water from the engine 11 flows towards the intercooler 132 after passing through the thermostat 15, and then flows back to the water pump 14, which is called a large circulation.

The thermostat 15 has a certain temperature regulation effect. When the heat dissipation demand of the engine 11 is not high, the intercooler 132 and the cooling fan 12 do not need to work, a small circulation will meet the heat dissipation demand of the engine 11. When the heat dissipation demand of the engine 11 is high, the intercooler 132 and the cooling fan 12 are working and a large circulation is performed to meet the heat dissipation demand of the engine 11.

Referring to Figures 6 and 7, the cooling fan 12 is directly connected to the output shaft of the engine 11 and is facing the water-cooled radiator 131. It is rotated as a function of engine 11. The cooling air blown from the cooling fan 12 is used for cooling the water-cooled radiator 131 and the intercooler 132, so that the heat dissipation capacity of the water-cooled radiator 131 and the intercooler 132 is increased. The intercooler 132 is located in the large and small circulation where the water pump 14 is located. The water-cooled radiator 131 is used for cooling the water in the large and small circulation. The faster the engine 11 rotates, the greater the heat dissipation demand is. Since the cooling fan 12 is in drivable connection with the engine 11, the higher the rotational speed of the cooling fan 12, the lower the temperature of the intercooler 132, the better the cooling effect of the water-cooled radiator 131 for the water output from the water pump 14. And the water output from the water pump 14 flows towards the interior of the engine 11 to realize the heat dissipation to the interior of the engine 11.

With continued reference to Figures 6 and 7, the cooling fan 12 is located between the engine 11 and heat dissipation assembly 13. The cooling air output from the cooling fan 12 is blown to both the engine 11 and the heat dissipation assembly 13 to directly cool the engine 11 and the heat dissipation assembly 13. The cooling fan 12 is larger in size than each of the electronic fans described later, and the air blown out by the cooling fan 12 also has a certain cooling effect on the components around the cooling fan 12 described above, such as the hydraulic oil radiator 24 and the transmission oil radiator 33 described later.

Returning to Figure 1, the engine cooling system 1 further includes a first air guide cover 17 fixed to the heat dissipation assembly 13. The cooling fan 12 is located inside the first air guiding cover 17. The intercooler 132 is fixedly connected to the water-cooled radiator 131. The water-cooled radiator 131 and the intercooler 132 are mechanically fixed together, and the cooling fan 12 is mounted to the water-cooled radiator 131 and/or the intercooler 132. This arrangement makes the water-cooled radiator 131, the intercooler 132, and the cooling fan 12 occupy a very small space, and are arranged inside the power cabin of the engineering vehicle. Moreover, the cooling water connection pipelines between the intercooler 132, the water-cooled radiator 131 and the engine 11 are made very short, so that the engineering vehicle cooling system has a compact structure. Furthermore, the cooling fan 12 directly cools the intercooler 132 and the engine 11, and further cools the cooling water in the water-cooled radiator 131.

With the aforesaid structure and form, the water-cooled radiator 131, on the premise of satisfying its own cooling water circulation, also realizes the assembling of the cooling fan 12, the direct cooling of the intercooler 132 and the engine 11, and the high integration of the engine cooling system 1.

Referring to Figures 1 and 7, the hydraulic cooling system 2 also includes a hydraulic oil radiator 24, which is a component that radiates and cools the hydraulic oil. The hydraulic oil radiator 24 and the water-cooled radiator 131 are arranged parallel to each other, substantively aligned with each other and are fixedly connected. An oil inlet 331 of the hydraulic oil radiator 24 is in fluid communication with a first oil return port 210 of the hydraulic system 21 and an oil outlet 332 of the hydraulic oil radiator 24 is in fluid communication with an oil tank 211 of the hydraulic system 21. The oil tank 211 of the hydraulic system 21 is mounted inside the power cabin. The first electronic fan 22 is mounted on a side of the hydraulic oil radiator 24 facing the engine 11.

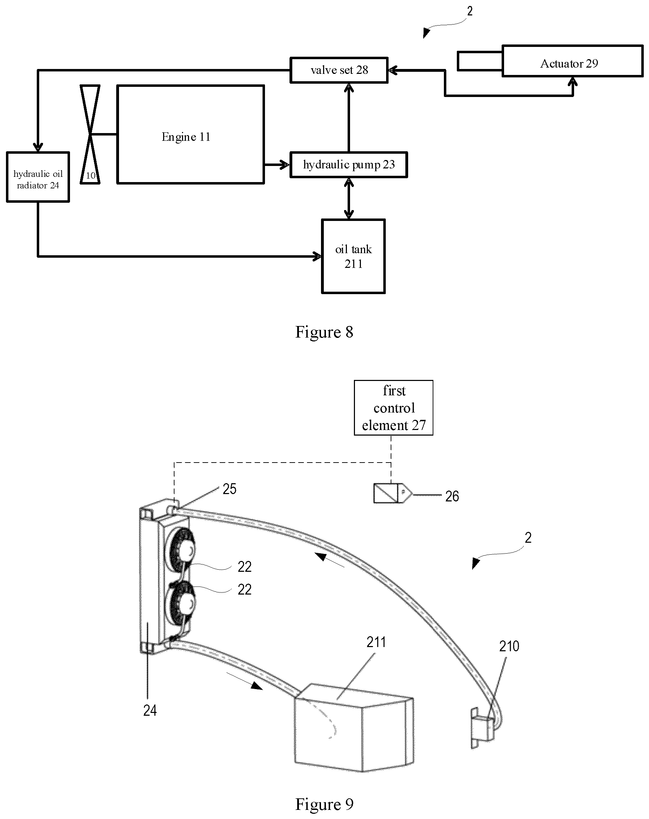

Referring to Figure 8, the hydraulic cooling system 2 further includes a hydraulic oil radiator 24, a hydraulic pump 23, a valve set 28 and an actuator 29. The hydraulic pump 23 is in drivable connection with the engine 11. The oil inlet 331 of the hydraulic oil radiator 24 is in fluid communication with a first oil return port 210 of the hydraulic system 21 and an oil outlet 332 of the hydraulic oil radiator 24 is in fluid communication with an oil tank 211 of the hydraulic system 21. The oil tank 211 of the hydraulic system 21 is mounted inside the power cabin. The first electronic fan 22 is mounted on a side of the hydraulic oil radiator 24 facing the engine 11.

The engine 11 is in drivable connection with the hydraulic pump 23, and the hydraulic oil flows through the valve set 28 to the actuator 29 to realize the vehicle operation. The hydraulic oil works in the actuator 29 with its temperature rising, it flows into the hydraulic oil radiator 22 and returns to the hydraulic oil tank 201 after it is cooled by the first electronic fan 22. The high-temperature hydraulic oil of the hydraulic system 21 flows into the interior of the hydraulic oil radiator 24 through the first oil return port 210 of the hydraulic system 21. The hydraulic oil radiator 24 cools the hydraulic oil and then conveys the cooled hydraulic oil to the oil tank 211 of the hydraulic system 21. The hydraulic oil in the oil tank 211 of the hydraulic system 21 flows then into other components of the hydraulic system 21, so that the hydraulic oil circulates.

The first electronic fan 22 achieves the heat dissipation of the hydraulic oil radiator 24. The first electronic fan 22 is driven by a separate motor. For one hydraulic oil radiator 24, two first electronic fans 22 may be mounted correspondingly, and the actions of the two first electronic fans 22 are synchronized. Of course, only one of the first electronic fans 22 may be controlled to operate as required. The air blown by the first electronic fan 22 not only cool the hydraulic oil radiator 24, but also has a certain cooling effect on the components around the hydraulic oil radiator 24, such as the engine 11, the intercooler 132, and the water-cooled radiator 131.

With continued reference to Figure 8, in some embodiments, the hydraulic cooling system 2 further includes a hydraulic oil temperature detection element 25 and a hydraulic oil pressure detection element 26. The hydraulic oil temperature detection element 25 is mounted at an oil inlet 331 of the hydraulic oil radiator 24 to detect the oil temperature of hydraulic oil of the hydraulic system 21. The hydraulic oil pressure detection element 26 is mounted in the hydraulic system 21 to detect an oil pressure of the hydraulic system 21. The hydraulic oil temperature detection element 25 adopts such as a sensor. The hydraulic oil temperature detection element 25 detects the temperature of hydraulic oil entered into the hydraulic oil radiator 24. If the oil temperature of the hydraulic oil is high, it indicates the demand on a large heat dissipation capacity; otherwise, the heat dissipation capacity is small.

Whether the hydraulic system 21 is operating normally is determined as a function of the oil pressure of the hydraulic oil measured by the hydraulic oil pressure detection element 26. If a fluctuation in the oil pressure of the hydraulic oil of the hydraulic system 21 is detected, it is indicated that the hydraulic system 21 is in an operating state, and the operation of the hydraulic cooling system 2 may be controlled as desired at this time.

Referring to Figures 8 and 9, the hydraulic cooling system 2 further includes a first control element 27. The first control element 27 is electrically connected to the hydraulic oil temperature detection element 25, the hydraulic oil pressure detection element 26 and the first electronic fan 22. The first control element 27 is configured to control operation parameters of the first electronic fan 22 as a function of a temperature parameter detected by the hydraulic oil temperature detection element 25.

In some embodiments, the operation parameters of the first electronic fan 22 include at least one of: start, stop, rotation speed, rotation duration.

Before introducing the method of controlling the hydraulic system 21, the meaning of the parameters is introduced: wherein T₂ is the oil temperature detected by the hydraulic oil temperature detection element 25. T_{2H} is the high-efficient operation temperature of the hydraulic oil, which is a set value. Specifically, T_{2H} is 65°C -75°C, for example, 65°C, 70°C or 75°C. T_{2L} is the start temperature of the first electronic fan 22, which is a set value. T_{2L} is 45°C -55°C, specifically such as 45°C, 50°C or 55°C. X₁ is the temperature rising rate of the hydraulic oil of the hydraulic system 21, which is set according to the actual situation. X₂ is the fluctuation range after the hydraulic oil temperature of the hydraulic system 21 is stabilized, and X₂ is 1.5°C -2.5°C, specifically such as 1.5°C, 2°C or 2.5°C. T₂ₘₐₓ is an allowable temperature of hydraulic oil of the hydraulic system 21, and T₂ₘₐₓ is 80°C -90°C, specifically such as 80°C, 85°C or 90°C.

In some embodiments, the first control element 27 is configured to implement the following control method:
In the case of T₂≤T_{2L}, indicating a relatively low oil temperature of the hydraulic system 21, where no heat dissipation is required, the first electronic fan 22 is stopped and does not cool the hydraulic oil radiator 24. The hydraulic oil radiator 24 meets the requirement of cooling the hydraulic oil of the hydraulic system 21 by exchanging heat with air.

In the case of T₂>T_{2L}, the rotation speed of the first electronic fan 22 is controlled by means of a PID control method, so that the rising speed of T₂ is 0<ΔT₂/Δt≤X1. The PID control method gradually increases the oil temperature.

In the case of |T_{2H}-T₂|≤X₂, the first electronic fan 22 is operated at a constant rotation speed; in the case of T₂-T_{2H}>X₁, the first electronic fan 22 is operated at full speed, so that the oil temperature of the hydraulic system 21 does not exceed T₂ₘₐₓ. In this case, the oil temperature of the hydraulic oil is close to the maximum allowed value, thus the first electronic fan 22 operates at a constant speed to achieve maximum heat dissipation, so that the oil temperature of the hydraulic oil is always lower than T₂ₘₐₓ.

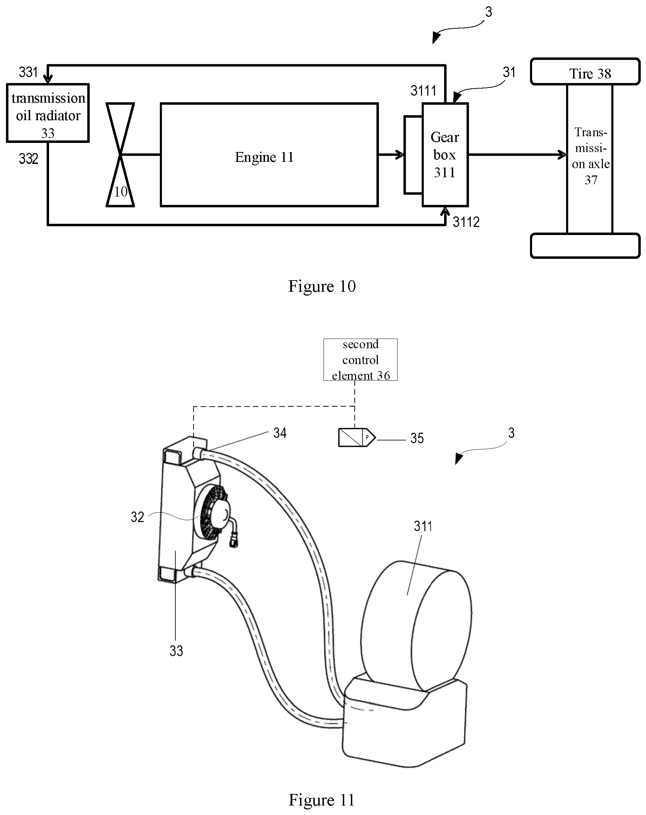

Referring to Figures 1 and 10, in some embodiments, the drivetrain cooling system 3 further includes a transmission oil radiator 33. An oil inlet 331 of the transmission oil radiator 33 is in fluid communication with a second oil return port 3111 of a gearbox 311 of the drivetrain 31 and an oil outlet 332 of the transmission oil radiator 33 is in fluid communication with an inflow port 3112 of the gearbox 311 of the drivetrain 31. The second electronic fan 32 is mounted to the transmission oil radiator 33. The second electronic fan 32 is controlled independently.

The drivetrain cooling system 3 includes a transmission oil radiator 33, a gearbox 311, a transmission axle 37 and a tire 38. The engine 11 is connected to the gearbox 311 and the transmission axle 37 and transmits power to the tire 304 to enable the vehicle to travel. The transmission oil works in the gearbox 311 with its temperature rising, it flows into the hydraulic oil radiator 33 and returns to the oil pan of the gearbox 311 after it is cooled by the second electronic fan 32.

Referring to Figure 4, the water-cooled radiator 131 is located between the transmission oil radiator 33 and the hydraulic oil radiator 24. The transmission oil radiator 33 is fixedly connected to the water-cooled radiator 131. This arrangement has a high integration since the fans are distributed at one position, so that the power cabin has enough space for mounting other parts.

Referring to Figure 11, in some embodiments, the drivetrain cooling system 3 further includes a transmission oil temperature detection element 34 and a transmission oil pressure detection element 35. The transmission oil temperature detection element 34 is, for example, a temperature sensor. The transmission oil temperature detection element 34 is mounted at an oil inlet 331 of the transmission oil radiator 33 to detect the oil temperature of hydraulic system 21. The transmission oil pressure detection element 35 is mounted in the gearbox 311 of the engine 11 to detect an oil pressure of the hydraulic system 21.

When the transmission oil pressure detection element 35 detects a fluctuation in the oil pressure of the lubricating oil of the drivetrain 31, indicating that the drivetrain 31 is in an operating state, in which the drivetrain cooling system 3 may need to operate. When the transmission oil pressure detection element 35 detects no fluctuation in the oil pressure of the lubricating oil of the drivetrain 31, the operation of the drivetrain cooling system 3 does not need to operate.

In some embodiments, the drivetrain cooling system 3 further includes a second control element 36. The second control element 36 is electrically connected to the transmission oil temperature detection element 34, the transmission oil pressure detection element 35 and the second electronic fan 32, and the second control element 36 is configured to control operation parameters of the second electronic fan 32 as a function of a temperature parameter detected by the transmission oil temperature detection element 34.

In some embodiments, the operation parameters of the second electronic fan 32 include at least one of: start, stop, rotation speed, rotation duration.

Before introducing the control method by the second control element 36, the related parameters are introduced first. T₁ is the oil temperature of the lubricating oil detected by the transmission oil temperature detection element 34. T_{1L} is the start temperature of the first electronic fan 22, which is a set value. T_{1L} is 65°C -75°C, specifically such as 65°C, 70°C or 75°C. T_{1H} is the high-efficient operation temperature of the transmission oil, which is a set value. The high-efficient operation temperature of the transmission oil refers to the temperature of the lubricating oil required when the drivetrain 31 is operated at a high operation efficiency. For each desired product, there are certain parameter requirements for the operation efficiency of the drivetrain 31. T_{1H} is 85°C -95°C, specifically such as 85°C, 90°C or 95°C. Y₁ is the temperature rising rate of the hydraulic oil of the hydraulic system 21. Y₂ is the fluctuation range after the hydraulic oil temperature of the hydraulic system 21 is stabilized. Y₂ is 1.5°C -2.5°C, specifically such as 1.5°C, 2°C or 2.5°C. T₁ₘₐₓ is an allowable temperature of lubricating oil. T₁ₘₐₓ is 115°C -125°C, specifically such as 115°C, 120°C and 125°C.

In some embodiments, the second control element 36 is configured to implement the following step:
In the case of T₁≤T_{1L}, indicating a relatively low oil temperature of the lubricating oil of the drivetrain 31, where there is no heat dissipation demand or there is a low heat dissipation demand, and the use of the transmission oil radiator 33 alone satisfies the cooling requirement, and in this case, the second electronic fan 32 stops.

In the case of T₁>T_{1L}, the rotation speed of the second electronic fan 32 is controlled by means of a PID control method, so that the rising speed of T₁ is 0<ΔT₁/Δt≤Y₁. The PID control method causes the rotational speed of the second electronic fan 32 to gradually vary to correspond to a gradually increasing temperature of the lubricating oil of the drivetrain 31. Y₁ is the temperature rising rate of the hydraulic oil of the hydraulic system 21.

In the case of |T_{1H}-T₁|≤Y₂, indicating that the oil temperature of the lubricating oil in the drivetrain 31 has approached the allowable maximum value, in this case, the second electronic fan 32 is operated at a constant speed so that the oil temperature of the lubricating oil is always equal to T_{1H}. T_{1H} is 85-95°C.

In the case of T₁-T_{1H} > Y₂, indicating that the oil temperature of the lubricating oil of the drivetrain 31 has reached or even exceeded the allowable maximum value, in this case, the second electronic fan 32 is operated at full speed, so that T₁<T₁ₘₐₓ. As introduced above, T₁ₘₐₓ is an allowable maximum temperature of lubricating oil. T₁ₘₐₓ is 115-125°C, specifically such as 115°C, 120°C or 125°C.

Referring to Figure 9, in some embodiments, the air-conditioning cooling system 4 further includes a condenser 43 and a compressor 45 in fluid communication via a refrigerant line 46. The condenser 43 is in fluid communication with the compressor 45, and the cold air after heat exchange by the condenser 43 enters the interior of the cab 44 to cool the cab 44. The second electronic fan 32 is in drivable connection with a third control element 47. The third electronic fan 42 is mounted to the condenser 43. The heat of the condenser 43 is dissipated by the third electronic fan 42 to further improve the heat dissipation capacity of the condenser 43. The third electronic fan 42 may be independently controlled.

The hydraulic oil radiator 24, the transmission oil radiator 33, the cooling fan 12, the first electronic fan 22, the second electronic fan 32, and the third electronic fan 42 are all fixedly connected to form an integrated whole.

The embodiments of this disclosure also provides an engineering vehicle including an engineering cooling system according to any one of the technical solutions of this disclosure.

The embodiments of this disclosure further provides a method of cooling an engineering vehicle by using an engineering cooling system according to any one of the technical solutions of this disclosure, including the steps:
Firstly, detecting the temperature of the engine 11, the temperature of hydraulic oil of the hydraulic system 21, the temperature of the drivetrain 31 and the temperature of the air-conditioning system 41 to determine whether there is a component that needs to be cooled in the engine 11, the hydraulic system 21, the drivetrain 31 and the air-conditioning system 41. The temperature of the engine 11 is the outlet temperature of the engine 11. The hydraulic oil temperature of the hydraulic system 21 is for example the return oil temperature or the outlet temperature of the hydraulic system 21. The temperature of the drivetrain 31 is specifically, for example, a hydraulic oil temperature of the drivetrain 31. The temperature of the air-conditioning system 41 is, for example, the temperature of a refrigerant or the air temperature at the outlet of the air-conditioning system 41. When the temperature of any one of the components of the engine 11, the hydraulic system 21, the drivetrain 31, and the air-conditioning system 41 exceeds the set value of the component, the triggering condition is met.

Secondly, when the triggering condition is met, cooling in at least one of the following ways: cooling the heat dissipation assembly 13 by means of the cooling fan 12 of the engineering vehicle cooling system, cooling the hydraulic oil radiator 24 by means of the first electronic fan 22, cooling the transmission oil radiator 33 by means of the second electronic fan 23, and cooling the condenser 43 by means of the third electronic fan 42.

Each of these operating conditions is described in detail below in conjunction with the actual operating conditions of the engineering vehicle.

When the engineering vehicle is in a traveling condition, only the engine 11 and the drivetrain 31 work, the cooling fan 12 of the engine cooling system 1 is used for cooling the heat dissipation assembly 13, the second electronic fan 32 is used for cooling the transmission oil radiator 33, the engine cooling system 1 utilizes all or part of the thermostat to enable the engine 11 to operate at a high-efficiency, and the drivetrain cooling system 3 utilizes the second electronic fan 32 which is operated independently to enable the temperature of the lubricating oil to reach a more satisfactory oil temperature, so that the drivetrain 31 is operated at a high-efficiency point. In this condition, the first electronic fan 22 neither operates nor cools the hydraulic oil radiator 24, and the third electronic fan 42 neither operates nor cools the condenser 43, thereby reducing the excess fan power consumption and achieving the effect of dual energy saving.

When the engineering vehicle is in the working condition, only the engine 11 and the hydraulic system 21 are operated, at this time, both the drivetrain cooling system 3 and the air-conditioning cooling system 4 stop working, reducing the excess fan power consumption. Meanwhile, the engine 11 and the hydraulic system 21 work at high efficiency points, and the dual energy-saving effect is achieved.

According to the above technical solutions, the total cooling amount of the engine 11, the drivetrain cooling system 3, the hydraulic cooling system 2 and the air-conditioning cooling system 4 is dispersed in each independent cooling unit, reducing the cooling load of the directly-connected cooling fan 12, so that the fan noise sources are dispersed from one to more, greatly reducing the noise of the whole vehicle.

In the description of the present disclosure, it is to be understood that the terms "center", "longitudinal", "transverse", "front", "back", "left", "right", "vertical", "horizontal", "top", "bottom", "inner", "outer", etc., indicate orientations or positional relationships based on those shown in the drawings, merely for convenience in describing this disclosure and simplifying the description, and do not indicate or imply that the device or element referred to must have a particular orientation, be constructed in a particular orientation, and be operated, and therefore, should not be taken as limiting the scope of this disclosure.

Finally, it is to be noted: the above embodiments are only intended to illustrate the technical solution of the disclosure and not to limit it; although the disclosure has been described in detail with reference to preferred embodiments, the ordinary skill in the art will understand that: modifications to the specific embodiments of the disclosure or equivalent substitutions for parts of the technical features may still be made; all of which are intended to be covered by the scope of the technical solutions claimed in this disclosure without departing from the spirit thereof.

## Claims

1. An engineering vehicle cooling system, comprising:
an engine cooling system (1) comprising an engine (11), a cooling fan (12), and a heat dissipation assembly (13), the engine (11) drivingly connected to the cooling fan (12) to cool the heat dissipation assembly (13);
a hydraulic cooling system (2) comprising a hydraulic system (21) and a first electronic fan (22), the first electronic fan (22) is configured to cool the hydraulic system (21);
a drivetrain cooling system (3) comprising a drivetrain (31) and a second electronic fan (32) configured to cool the drivetrain (31); and
an air-conditioning cooling system (4) comprising an air-conditioning system (41) and a third electronic fan (42), the third electronic fan (42) is configured to cool the air-conditioning system (41);
wherein the first electronic fan (22), the second electronic fan (32) and the third electronic fan (42) are distributed around the cooling fan (12).

2. The engineering vehicle cooling system according to claim 1, wherein the heat sink assembly (13) comprises:
a water-cooled radiator (131) mounted outside the engine (11), the cooling fan (12) being disposed adjacent to the water-cooled radiator (131) to cool it; and
an intercooler (132) disposed adjacent to the water-cooled radiator (131);
wherein the engine cooling system (1) further comprises:
a water pump (14) in fluid communication with an oil outlet (332) of the water-cooled radiator (131), the water pump (14) being in drivable connection with the engine (11);
a thermostat (15) mounted upstream of the water-cooled radiator (131) and located downstream of the water pump (14), the thermostat (15) comprises a first water outlet (151) and a second water outlet (152) that are arranged in parallel, the first water outlet (151) being directly connected with a water inlet (141) of the water pump (14), the water-cooled radiator (131) being mounted downstream of the second water outlet (152) of the thermostat (15); and
a water temperature detection element (16) mounted at a water outlet of the engine (11).

3. The engineering vehicle cooling system according to claim 1 or 2, wherein the cooling fan (12) is fixed to an output shaft of the engine (11) and is facing the water-cooled radiator (131).

4. The engineering vehicle cooling system according to any one of claims 1-3, wherein the engine cooling system (1) further comprises:
a first air guiding cover (17) fixed at the heat dissipation assembly (13), in which first air guiding cover (17) the cooling fan (12) is located, and the intercooler (132) is fixedly connected with the water-cooling radiator (131).

5. The engineering vehicle cooling system according to any one of claims 1-4, wherein the hydraulic cooling system (2) further comprises:
a hydraulic pump (23) in drivable connection with the engine (11); and
an hydraulic oil radiator (24) with an oil inlet (331) in fluid communication with a first oil return port (210) of the hydraulic system (21) and with an oil outlet (332) in fluid communication with an oil tank (211) of the hydraulic system (21) mounted inside a power cabin, the first electronic fan (22) being mounted on a side of the hydraulic oil radiator (24) facing the engine (11).

6. The engineering vehicle cooling system according to claim 5, wherein the hydraulic cooling system (2) further comprises:
a hydraulic oil temperature detection element (25) mounted at an oil inlet (331) of the hydraulic oil radiator (24) to detect the oil temperature of hydraulic oil of the hydraulic system (21); and
a hydraulic oil pressure detection element (26) mounted in the hydraulic system (21) to detect an oil pressure of the hydraulic system (21).

7. The engineering vehicle cooling system according to claim 6, wherein the hydraulic cooling system (2) further comprises:
a first control element (27) electrically connected to the hydraulic oil temperature detection element (25), the hydraulic oil pressure detection element (26) and the first electronic fan (22), the first control element (27) being configured to control operation parameters of the first electronic fan (22) as a function of a temperature parameter detected by the hydraulic oil temperature detection element (25).

8. The engineering vehicle cooling system according to claim 7, wherein the operation parameters of the first electronic fan (22) comprise at least one of: start, stop, rotation speed, rotation duration.

9. The engineering vehicle cooling system according to claim 7 or 8, wherein the first control element (27) is configured to implement following steps:
in the case of T₂≤T_{2L}, stopping the first electronic fan (22);
in the case of T₂>T_{2L}, controlling the rotation speed of the first electronic fan (22) by means of a PID control method, so that the rising speed of T2 is 0<ΔT₂/Δt≤X₁;
in the case of | T_{2H}-T₂ | ≤X₂, operating the first electronic fan (22) at a constant rotation speed; in the case of T₂-T_{2H}>X₁, operating the first electronic fan (22) at full speed, so that the oil temperature of the hydraulic system (21) does not exceed T₂ₘₐₓ;
wherein T₂ is the oil temperature detected by the hydraulic oil temperature detection element (25); T_{2H} is a high-efficiency operation temperature of the hydraulic oil and is a set value; T_{2L} is a start temperature of the first electronic fan (22) and is a set value; X₁ is the temperature rising speed of the hydraulic oil of the hydraulic system (21); X₂ is the fluctuation range after the hydraulic oil temperature of the hydraulic system (21) is stabilized; T₂ₘₐₓ is an allowable temperature of hydraulic oil of the hydraulic system (21).

10. The engineering vehicle cooling system according to claim 9, wherein T_{2L} is 45°C -55°C, T_{2H} is 65°C -75°C, and/or T₂ₘₐₓ is 80°C -90°C, and/or X₂ is 1.5°C -2.5°C.

11. The engineering vehicle cooling system according to any one of claims 1-10, wherein the drivetrain cooling system (3) further comprises:
a transmission oil radiator (33) with an oil inlet (331) in fluid communication with a second oil return port (3111) of a gearbox (311) of the drivetrain (31) and with an oil outlet (332) in fluid communication with an inflow port (3112) of the gearbox (311) of the drivetrain (31), the second electronic fan (32) being mounted to the transmission oil radiator (33).

12. The engineering vehicle cooling system according to claim 11, wherein the drivetrain cooling system (3) further comprises:
a transmission oil temperature detection element (34) mounted at an oil inlet (331) of the transmission oil radiator (33) to detect the oil temperature of hydraulic system (21); and
a transmission oil pressure detection element (35) mounted in the gearbox (311) of the engine (11) to detect an oil pressure of the hydraulic system (21).

13. The engineering vehicle cooling system according to claim 12, wherein the drivetrain cooling system (3) further comprises:
a second control element (36) electrically connected to the transmission oil temperature detection element (34), the transmission oil pressure detection element (35) and the second electronic fan (32), the second control element (36) being configured to control operation parameters of the second electronic fan (32) as a function of a temperature parameter detected by the transmission oil temperature detection element (34).

14. The engineering vehicle cooling system according to claim 13, wherein the operation parameters of the second electronic fan (32) comprise at least one of: start, stop, rotation speed, rotation duration.

15. The engineering vehicle cooling system according to claim 13 or 14, wherein the second control element (36) is configured to implement the following step:
in the case of T₁≤T_{1L}, stopping the second electronic fan (32); in the case of T₁>T_{1L}, controlling the rotation speed of the second electronic fan (32) by means of a PID control method, so that the rising speed of T1 is 0<ΔT₁/Δt≤Y₁; in the case of | T_{1H}-T₁ | ≤Y₂, operating the second electronic fan (32) at a constant speed; and in the case of T₁-T_{1H}>Y₂, operating the second electronic fan (32) at full speed, so that T₁<T₁ₘₐₓ;
wherein T₁ is the oil temperature of the lubricating oil detected by the transmission oil temperature detection element (34); T_{1L} is a start temperature of the first electronic fan (22) and is a set value; T_{1H} is a high-efficiency operation temperature of the hydraulic oil and is a set value; T₁ₘₐₓ is an allowable temperature of lubricating oil; Y₁ is the temperature rising rate of the hydraulic oil of the hydraulic system (21); Y₂ is the fluctuation range after the hydraulic oil temperature of the hydraulic system (21) is stabilized.

16. The engineering vehicle cooling system according to claim 15, wherein T_{1L} is 65°C -75 °C, T_{1H} is 85°C -95 °C, and/or T₁ₘₐₓ is 115°C -125°C, and/or Y₂ is 1.5°C -2.5°C.

17. The engineering vehicle cooling system according to any one of claims 1-16, wherein the air-conditioning cooling system (4) further comprises:
a condenser (43) in fluid communication with the air-conditioning system (41), the condenser (43) being configured to circulate a refrigerant within the air-conditioning system (41); and
a third control element (47) electrically connected to the third electronic fan (42) for controlling operation parameters of the third electronic fan (42).

18. The engineering vehicle cooling system according to any one of claims 1-17, wherein the first electronic fan (22), the second electronic fan (32) and the third electronic fan (42) are all located inside a power cabin of the engineering vehicle.

19. An engineering vehicle comprising an engineering cooling system according to any one of claims 1-18.

20. A method of cooling an engineering vehicle by using an engineering cooling system according to any one of claims 1-18, comprising following steps:
detecting the temperature of the engine (11), the temperature of hydraulic oil of the hydraulic system (21), the temperature of the drivetrain (31) and the temperature of the air-conditioning system (41) to determine whether there is a component that needs to be cooled in the engine (11), the hydraulic system (21), the drivetrain (31) and the air-conditioning system (41);
if there is a component that needs to be cooled, the triggering condition is met; when the triggering condition is met, cooling in at least one of the following ways: cooling the heat dissipation assembly (13) by means of the cooling fan (12) of the engineering vehicle cooling system, cooling a hydraulic oil radiator (24) by means of the first electronic fan (22), cooling a transmission oil radiator (33) by means of the second electronic fan (32), and cooling a condenser (43) by means of the third electronic fan (42).
